# EUROPÄISCHE PATENTSCHRIFT

(11) **EP 1 781 440 B1**
(45) Veröffentlichungstag und Bekanntmachung des Hinweises auf die Patenterteilung: **17.03.2010**
(21) Anmeldenummer: 05769272.5
(22) Anmeldetag: 15.08.2005
(51) Int. Cl.: B23D 15/08

(54) **SCHLAGSCHERE FÜR BLECHE**
GUILLOTINE SHEARS FOR SHEET METAL
CISAILLE-GUILLOTINE POUR PLAQUES DE METAL

(30) Priorität: 24.08.2004 CH 138904
(43) Veröffentlichungstag der Anmeldung: 09.05.2007
(73) Patentinhaber: Soudronic AG, 8962 Bergdietikon (CH)
(72) Erfinder: SPIGA, Mauro, I-40050 Minerbio (BO) (IT); BOISSIN, Guy, CH-8104 Weiningen (CH); KREBS, Roland, CH-3312 Fraubrunnen (CH)
(74) Vertreter: Schalch, Rainer
(86) Internationale Anmeldenummer: PCT/CH2005/000473
(87) Internationale Veröffentlichungsnummer: WO 2006/021112

(56) Entgegenhaltungen:
- DE-A1- 2 311 873
- DE-A1- 3 015 913
- US-A- 3 757 621

## Beschreibung

### Hinweis auf verwandte Anmeldungen

Diese Anmeldung beansprucht die Priorität der schweizerischen Patentanmeldung Nr. 1389/04, die am 24. August 2004 eingereicht wurde.

### Hintergrund

Die vorliegende Erfindung betrifft eine Schlagschere gemäss dem Oberbegriff des unabhängigen Patentanspruchs. Eine derartige Schlagschere wird in US 3 757 621 A offenbart.

### Stand der Technik

Schlagscheren für Bleche sind im Gebrauch weit verbreitet. Je nach der Länge des zu erzeugenden Schnitts sind erhebliche Druckkräfte für das Messer nötig, auch dann, wenn der Schnitt leicht schräg zur Blechoberfläche erfolgt. Die höchsten Druckkräfte werden benötigt, wenn das Messer parallel zur Blechoberfläche ausgerichtet ist. Da der Schnitt durch Scherung des Bleches erfolgt, ergeben sich weiter durch die Verdrängung des Materials beim Schnitt beträchtliche Kräfte, die die aneinander vorbei gleitenden Messerklingen voneinander weg drücken, was auch bei geringer Schnittluft unvermeidlich ist und diese erhöht.

Häufig (aber nicht immer) werden Schlagscheren so konstruiert, dass ein Blechstreifen oder Blechtafeln auf einer horizontalen Vorschubfläche platziert und entlang dieser gegen die Messer geführt werden. Die quer, in der Regel senkrecht, zur Vorschubrichtung angeordneten Messer öffnen und schliessen sich im Takt, wobei jeweils in deren Offenstellung der zu zerschneidende Blechstreifen (oder Blechtafeln) für den nächsten Schnitt vorgeschoben werden. Dabei ist in der Regel (aber nicht immer) das untere Messer fest im Rahmen der Schlagschere angeordnet, während sich das obere Messer zur Ausführung seines Arbeitshubs hebt und senkt, d.h. öffnet und schliesst, und so die Schnitte ausführt.

Je nach Qualität des auszuführenden Schnitts ergeben sich erhöhte konstruktive Anforderungen; sei dies genügende Steifigkeit des Rahmens der Schlagschere, sei dies genügend feste Anordnung des unteren Messers am Rahmen, oder, im Besonderen, die präzise und spielfreie Lagerung des oberen Messers über seinen gesamten Arbeitshub, insbesondere für den Schnitt.

Bei vielen Anwendungen, im Besonderen im Bereich der Herstellung von Blechgebinden, wie u.a. geschweissten Blechdosen, ist die geforderte Schnittqualität hoch. Einerseits beim Schnitt selbst, z.B. betreffend Brauen, dann bei der sauberen Ausrichtung des Schnitts, wo die Toleranzen über die ganze Schnittlänge im Bereich von Zehntel-Millimeter oder darunter liegen. Ohne die genaue Einhaltung solcher Toleranzen könnten die nachfolgenden Arbeitsgänge nicht fehlerfrei ausgeführt werden; z.B. bei der Verschweissung des nachträglich gerundeten Blechs zur Zarge oder beim Einbördeln des Bodens bzw. Deckels in die Zarge, so dass schliesslich die fertige Dose bzw. das fertige Blechgebinde entsteht.

Zu dieser Schnittqualität kommt hinzu, dass in der Linie häufig eine Massenproduktion gefahren wird, was einen hohen und vor allem möglichst wenig unterbrochenen Arbeitstakt über lange Zeit, bis hin zum Dreischichtbetrieb, erfordert.

Konventionelle Schlagscheren der genannten Art werden deshalb seit langer Zeit mit einer aufwändige Lagerung des oder der bewegten Messerträger (im Fall der oben beschriebenen, verbreiteten Konstruktion: des oberen Messerträgers) ausgerüstet. Verbreitet ist die Lagerung des bewegten Messerträgers an vier Säulen, welche an dessen Enden oder Ecken angeordnet sind, d.h. über sogenannte Säulengestelle. An jeder der Säulen läuft ein zylindrischer Kugelkäfig mit Kugeln auf und ab, wobei die Lagerstelle des Messerträgers ihrerseits den Käfig und die Kugeln umfasst, so dass sie auf diesen, und damit auch an den Säulen, auf und ab laufen kann. Vorteilhaft an solch einer Lagerung ist deren Belastbarkeit und Präzision, nachteilig sind die notwendigen Einstellarbeiten sowie der Verschleiss. Insbesondere bei der Massenproduktion ist die Produktionsunterbrechung für wiederkehrende Justierung oder Ersatz eines Säulengestells auf Grund von Verschleiss problematisch. Zudem ergibt sich während der Produktion gegen die Verschleissgrenze hin eine Grauzone, wo die erzielte Schnittqualität zur Vermeidung von Betriebsunterbrüchen zwar noch hingenommen wird, aber eigentlich nicht mehr dem Soll entspricht.

### Darstellung der Erfindung

Es ist Aufgabe der vorliegenden Erfindung, eine Schlagschere bereit zu stellen, bei der diese Nachteile vermindert sind.

Diese Aufgabe wird durch die Merkmale von Anspruch 1 gelöst.

Dadurch, dass die Messerträger über Blattfederanordnungen miteinander in Verbindung stehen, ergibt sich eine eingeschränkte Relativbewegung der Messerträger gegeneinander: Blattfedern sind ihrem Blatt entlang verbiegbar, allenfalls tordierbar, jedoch um die schmale Seite des Blattes nicht biegbar, sondern steif.

Dadurch, dass der elastische Deformationsbereich der Blattfederanordnungen den maximalen Bereich der Relativbewegung, das heisst den maximalen Arbeitshub, bestimmt, verbleibt kein Raum für eine andere Bewegung der Messerträger im Hinblick auf den Arbeitshub, unabhängig von einer eventuellen zusätzlichen Lagerung der Messerträger.

Schliesslich muss (bzw. kann) eine Blattfederanordnung, wenn einmal richtig dimensioniert, nicht eingestellt werden; auch ist sie verschleissfrei.

Mit anderen Worten ist es so, dass durch den Einsatz von Blattfederanordnungen gemäss Anspruch 1 z.B. Säulengestelle ersetzt werden können, womit Verschleiss und Einstellarbeiten an einer erfindungsgemässen Schlagschere entsprechend vermindert sind.

Über die gestellte Aufgabe hinaus ergibt sich bei einer bevorzugten Ausführungsform nach Anspruch 2 eine vollkommen verschleissfreie und einstellfreie Lagerung des bewegten Messerträgers, da dieser schwimmend an mindestens zwei Blattfederanordnungen aufgehängt ist, deren Deformationsbereich den Pfad der Relativbewegung, das heisst den Pfad des Arbeitshubs, vollständig definiert, mithin jede andere oder zusätzliche Lagerung des bewegten Messerträgers unnötig macht.

### Kurze Beschreibung der Zeichnungen

Bevorzugte Ausführungsformen werden nachstehend anhand der Figuren näher beschrieben.

Es zeigt:
Figur 1 eine Ansicht der erfindungsgemässen Schlagschere in Richtung des Vorschubs von zu zerschneidenden Blechtafeln oder eines zu zerschneidenden Blechstreifens, und
Figur 2 einen Querschnitt durch die Schlagschere von Figur 1 entlang der Ebene A.

### Wege zur Ausführung der Erfindung

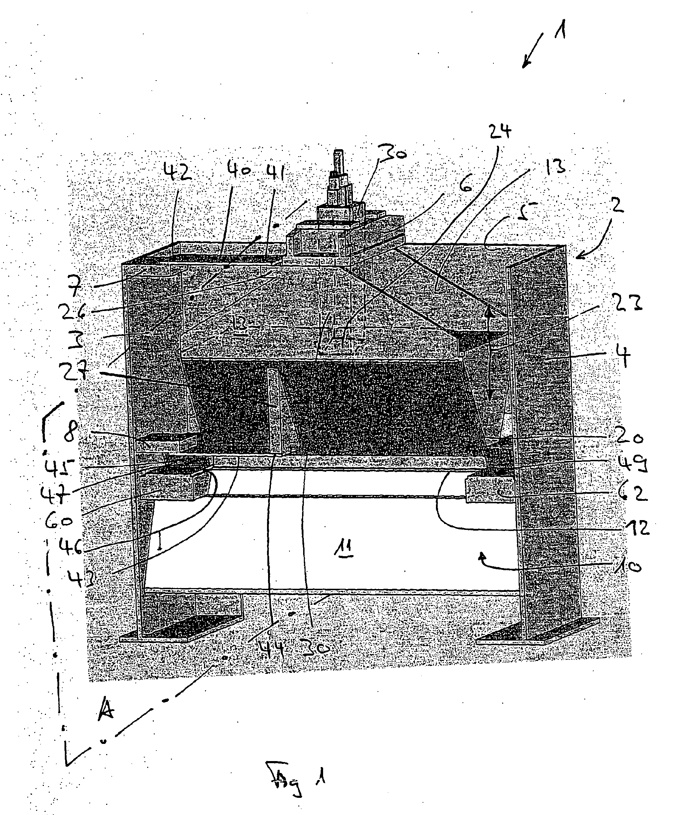

Figur 1 zeigt eine dreidimensionale Ansicht einer erfindungsgemässen Schlagschere 1, mit einer Rahmenstruktur 2, bestehend aus den Seitenteilen 3 und 4 sowie einer Rückwand 5. Eine vordere Wand der Rahmenstruktur 2 ist zur Entlastung der Figur weggelassen; die Blickrichtung auf das Innere der Schlagschere 1 entspricht der Vorschubrichtung eines zu zerschneidenden Blechstreifens oder zu zerschneidender Blechtafeln. Zur Entlastung der Figur ebenfalls weggelassen ist ein Vorschubtisch mit den entsprechenden Organen für den schrittweisen Vorschub des Bleches, welcher konventionell ausgeführt werden kann.

Die Seitenteile 3 und 4 schliessen zwischen sich einen unteren Messerträger 10 ein, der mit den Seitenteilen 3,4 verbunden, d.h. an diesen fest abgestützt ist. Er weist einen Körper 11 mit einem kastenförmigen, hier im wesentlichen dreieckigen Hohlprofil auf und trägt ein unteres Messer 12.

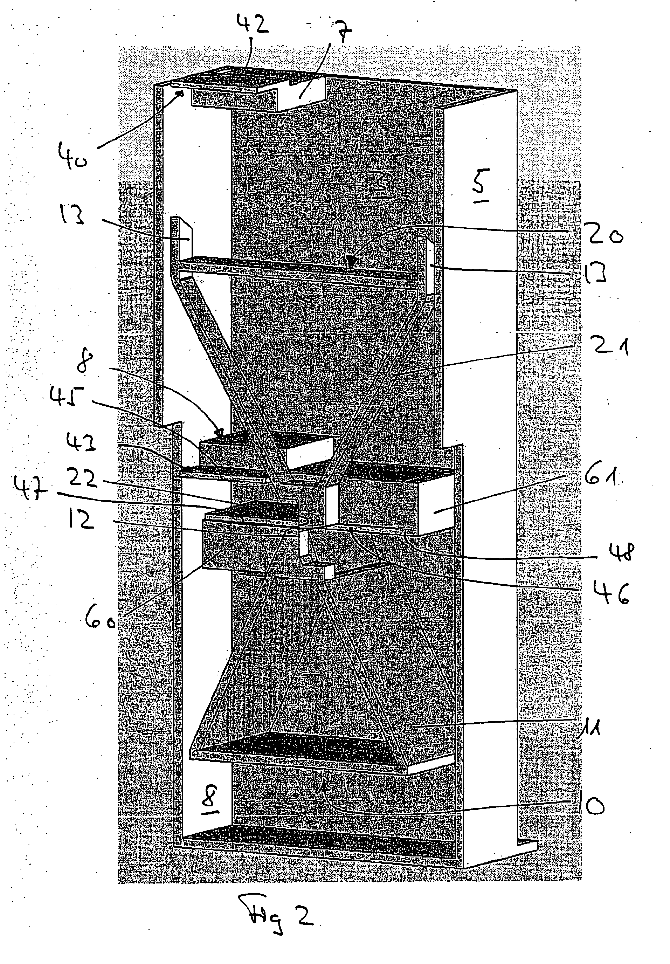

Ein oberer Messerträger 20 besitzt einen Körper 21 mit ebenfalls einem kastenförmigen (dreieckigen) Hohlprofil, und trägt ein oberes Messer 22 (Figur 2). Er ist über dem unteren Messerträger 10 angeordnet und in der Rahmenstruktur 2 beweglich gelagert, so dass er eine auf und ab Bewegung, auf den unteren Messerträger 10 zu und von diesem weg, ausführen kann. Diese Bewegung entspricht einerseits dem Arbeitshub des Messerträgers 20 zum Schnitt eines Bleches (angedeutet durch den Doppelpfeil 23), und entspricht andererseits der Relativbewegung zwischen dem beweglichen Messerträger 20 und dem fest angeordneten Messerträger 10.

Der Arbeitshub 23 wird ausgelöst durch einen vertikal angeordneten Hydraulikzylinder 30 eines nicht näher dargestellten Antriebs konventioneller Bauart für den Messerträger 20, welcher einerseits an einer Brücke 6 der Rahmenstruktur 2 festgelegt ist und andererseits auf eine Krafteinleitungstelle 24 in einer Begrenzungswand 25 des kastenförmigen Profils des Messerträgers 20 wirkt.

Die Figur zeigt weiter eine als Blattfeder 40 ausgebildete Blattfederanordnung, eine als Blattfeder 43 ausgebildete Blattfederanordnung und, teilweise sichtbar, weitere, als Blattfeder 46 sowie als Blattfeder 49 ausgebildete Blattfederanordnungen.

Der obere Messerträger 20 ist an den Blattfedern 40,43,46 und 49 schwimmend aufgehängt.

Die Blattfedern 40, 43 erstrecken sich parallel zum Messerträger 20. Die Blattfedern 46,49 verlaufen senkrecht zum Messerträger 20 und senkrecht zu dessen Arbeitshub 23.

Die Blattfedern 40,43,46 und 49 liegen in parallelen Ebenen; die Blattfedern 46,49 in einer gemeinsamen Ebene.

Die Blattfeder 40 ist an ihrem einen Ende 41 mit dem Körper 21 des oberen Messerträgers 20 verbunden, über ein Verbindungselement 26, dass an einer Versteifungsrippe 13 des Körpers 21 angeordnet ist und eine geeignete Befestigungsfläche für das Ende 41 besitzt. Das andere Ende 42 der Blattfeder 40 ist über ein Widerlager 7 des Seitenteils 3 an diesem und damit an der Rahmenstruktur 2 festgelegt (und damit wiederum gegenüber dem unteren Messerträger 10, der seinerseits am Seitenteil 3 festgelegt ist). Ebenso die Blattfeder 43, welche einerseits mit ihrem einen Ende 44 über ein geeignetes, rippenförmiges Verbindungselement 27 fest am Körper 21 des Messerträgers 20 und andererseits mit ihrem anderen Ende 45 über ein Widerlager 8 fest am Seitenteil 3 (und am Messerträger 10) angeordnet ist.

Die Blattfedern 40,43 sind fest mit ihren Widerlagern 7,8 und den Verbindungselementen 26,27 verbunden z.B. durch Verschraubung oder Schweissung, derart, dass sie sich S-förmig bzw. treppenförmig verbiegen, wenn der Arbeitshub 23 ausgeführt wird.

Es versteht sich von selbst, dass die Blattfedern 40,43 aus der Ebene ihrer Federblätter hinaus nach oben oder unten, d.h. in Richtung der Vertikalen, biegbar sind, nicht aber um ihre Schmalseite, d.h. in Richtung der Horizontalen. der Messerträger 20 ist also so gelagert, dass der in der Horizontalen fixiert ist und in der Vertikalen bewegt werden kann.

Damit stellt diese Anordnung eine Parallelaufhängung des Messerträgers 20 dar, wobei der elastische Deformationsbereich der Blattfedern 40,43 den maximalen Bereich der Relativbewegung zwischen den Messerträgern 10,20 bestimmt. Weiter ist durch die gezeigte Anordnung der Blattfedern 40,43 ausschliesslich eine Bewegung des Messerträgers 20 in Richtung des Arbeitshubs 23 zulässig; d.h., dass durch die dargestellte, schwimmende Aufhängung des Messerträgers 20 an den Blattfedern 40,43 ist der Pfad der Relativbewegung der Messerträger 10,20 vollständig definiert.

Zusätzlich ist dargestellt, dass die beiden Messerträger 10,20 miteinander über die Blattfedern 40,43 in Verbindung stehen, wobei der Seitenteil 3 mit den Widerlagern 7,8 sowie die Verbindungselemente 26,27 Bestandteile der Verbindung sind.

Weitere Verbindungselemente oder Widerlager 60,62 des unteren Messerträgers 10 dienen als Befestigungspunkte für die Blattfedern 46,49, wie dies nachstehend in Figur 2 näher erläutert wird:
Figur 2 zeigt einen in der Ebene A gelegenen Schnitt durch die Schlagschere von Figur 1 mit Blickrichtung gegen deren Seitenteil 3. Ersichtlich sind damit der Seitenteil 3 sowie die Rückwand 5 sowie die vordere Wand 8 der Rahmenstruktur 2 (wobei in Figur 1 die vordere Wand 8 weggelassen worden ist).

Ebenfalls ersichtlich sind der untere Messerträger 10 mit seinem Körper 11, der als kastenförmiges, im wesentlichen dreieckiges Hohlprofil ausgebildet ist, und das auf dem Messerträger 10 angeordnete, untere Messer 12. Unten am aus einem ebenfalls im wesentlichen dreieckförmigen Hohlprofil gebildeten Körper 21 des oberen Messerträgers 20 ist das obere Messer 22 angeordnet.

Weiter dargestellt sind die Widerlager 7,8 sowie die an Ihnen festgelegten Enden 41,44 der Blattfedern 40,43.

Am gezeigten Ende des unteren Messerträgers 10 (d.h. sein an den Seitenteil 3 anstossendes Ende) ist das Verbindungselement oder Widerlager 60 horizontal angeordnet, welches vorzugsweise mit dem Seitenteil 3 ebenfalls fest verbunden ist, und dann als Widerlager betrachtet werden kann, und ohne Verbindung mit den Seitenteil 3 ein Verbindungselement ist. Am gezeigten Ende des oberen, beweglichen Messerträgers 20 ist ein als Verbindungsarm 61 ausgebildetes Verbindungselement angeordnet, ebenfalls horizontal, das vom Widerlager 60 (bzw. Verbindungselement 60) weg weist. Der Fachmann kann, je nach Auslegung der Rahmenstruktur 2, ein Widerlager 60 oder ein Verbindungselement 60 vorsehen.

Die den Messerträgern 10,20 gemeinsame Blattfeder 46 ist mit ihrem einen Ende 47 am Widerlager 60 und mit ihrem anderen Ende 48 am Verbindungsarm 61 festgelegt; da Widerlager 60 und Verbindungselement 61 voneinander wegweisen, besitzt die Blattfeder 46 eine erhebliche Länge.

Auf der anderen Seite, das heisst im Bereich des Seitenteils 4, sind die Messerträger 10,20 über ihre gemeinsame Blattfeder 49 auf dieselbe Weise verbunden, wie dies im Bereich des Seitenteils 3 gezeigt ist; die Aufhängung des Messerträgers 20 über die Blattfedern 46,49 ist an beiden Seitenteilen 3,4 identisch ausgebildet.

Im Betrieb werden durch eine erfindungsgemässe Schlagschere 1 bevorzugt (aber nicht ausschliesslich) Bleche oder Blechstreifen einer Breite zwischen 500 bis 1200 mm geschnitten, mit einer Dicke von 0,08 bis 1,5 mm, besonders bevorzugt 0,12 bis 0,4 Millimeter. Die Schnittluft beträgt dann z.B. 0,01 mm; die benötigte Pressekraft kann 10 bis 13 t oder mehr erreichen.

Bei der genannten Dicke des zu zerschneidenden Bleches kann der Arbeitshub auf wenige mm, z.B. drei bis fünf mm, beschränkt werden. Der Hydraulikzylinder 30 bringt den Schnittdruck auf und verschiebt den Messerträger 20 in seinem unteren Totpunkt; wirkt der Hydraulikzylinder 30 zweiseitig, ergibt sich eine Zwangsführung des Messerträgers 20, das heisst er hebt diesen ebenfalls an. Wirkt der Hydraulikzylinder 30 nur einseitig, wird der Messerträger 20 durch die Blattfedern 40, 43,46 und 49 zurück in den oberen Totpunkt gehoben.

Durch die Bewegung der Messerträger 10,20 aufeinander zu und voneinander weg, bedingt durch die Federung der Blattfedern 40, 43, 46 und 49, bzw. der Verschiebung deren Enden 41,42; 44,45; 47,48 und 50,51 ergibt sich der Arbeitshub.

Dabei ist es so, dass die Widerlager 60, 62 in Ruhe bleiben und sich die Verbindungselemente 61,63 auf einem Bogen (welcher durch die S-förmige Deformation der Blattfedern 46,49 nicht genau einem Kreisbogen entspricht) auf und ab bewegen. Der "Radius" dieses Bogens ist gegeben durch die Länge der Blattfedern 46,49; je grösser die Länge der Blattfedern 46,49 bei gegebenem Arbeitshub 23 gewählt wird, desto kleiner fällt die durch die bogenförmige Bewegung bedingte horizontale Verschiebung der Messer 12,22, das heisst die laufende Veränderung der Schnittluft während dem Arbeitshub 23, aus.

Einerseits kann diese Veränderung der Schnittluft minimiert werden, in dem die Widerlager 60,62 und die Verbindungselemente 61,63 voneinander wegweisen und möglichst lange gewählt werden, was zu einer grossen Länge der Blattfedern 46,49 (und damit des Bogenradius) führt. Andererseits kann diese Veränderung der Schnittluft vorteilhaft genutzt werden: sind die Blattfedern 46,49 leicht erhöht angeordnet, derart, sich die Schnittluft beim Schnittvorgang selbst bereits verkleinert, ergibt sich eine gewisse Restriktion des Eingangs erwähnten Effekts, wonach die Messer 12,22 beim Schneidvorgang durch elastische Deformation der Rahmenstruktur 2 und der Messerträger 10,20 horizontal auseinander getrieben werden, was der Schnittqualität zuträglich ist.

Je nach vorgesehenen Schnittparametern und vorgesehenem Material kann der Fachmann die Länge der Blattfedern 46,49 sowie deren genaue Höhe gegenüber den Messern 10,12 bestimmen und so, wie oben beschrieben, die Schnittluft bzw. deren Veränderung während dem Schnitt günstig beeinflussen.

Durch die bogenförmige Bewegung des Messers 10 während dem Arbeitshub 23 ergibt sich weiter, dass die Blattfeder 40 leicht tordiert wird; die Blattfeder 43 steht aber dieser Torsion (und der bogenförmigen Bewegung des Messers 10) entgegen; die Aufhängung des Messerträgers 20 in der gezeigten Art, einschliesslich der Blattfeder 43, ist statisch überbestimmt und erscheint unzulässig.

Werden nun Blattfedern mit einer erheblichen Länge, z.B. 500 mm, eingesetzt und ein Arbeitshub von 4 Millimeter angenommen, beträgt die horizontale Verschiebung der Messer 12,22 , bzw. die Veränderung der Schnittluft, 0,005 mm. Dies führt, wie Versuche gezeigt haben, nur, aber immerhin, zu einer gegenseitigen Verspannung der Blattfedern 40, 43, 46, 49 während dem Schnittvorgang, was schliesslich wegen der durch die Verspannung bewirkten genaueren Führung der Messer 10, 12 ebenfalls in der Schnittqualität zuträglich ist.

Es hat sich gezeigt, dass vorteilhafterweise Blattfedern eingesetzt werden, deren Breite das zehnfache, vorzugsweise das Fünfzehnfache und besonders bevorzugt das Sechzehnfache ihrer Dicke beträgt. Zudem beträgt Ihre Länge vorteilhafterweise mindestens das Einfache, vorzugsweise das Doppelte und besonders bevorzugt das Zweieinhalbfache ihrer Breite.

Wie in der Beschreibung zu Figur 1 erwähnt, ist durch die schwimmende Aufhängung des Messerträgers 20 an den Blattfedern 40,43 bereits eine genügende Führung gegeben, um zur erforderlichen Schnittqualität zu kommen. Eine verbesserte Lagerung des Messerträgers 20 ergibt sich durch die Aufhängung an Blattfedern 46,49, quer zum Messerträger 20, wobei zusätzlich eine Blattfeder 40, parallel zum Messerträger 20, vorgesehen wird.

Schliesslich kann die Schnittqualität noch einmal positiv beeinflusst werden, in dem eine vierte Blattfeder 43, ebenfalls parallel zum Messerträger 20, angeordnet wird, was der in den Figuren 1 und 2 gezeigten, bevorzugten Ausführungsform entspricht.

Bei einer weiteren Ausführungsform ist es möglich, vier Blattfedern vorzusehen, welche alle parallel zueinander angeordnet sind und je die Konfiguration der in den Figuren 1 und 2 gezeigten Blattfedern 46,49 besitzen. Dann ist der Messerträger 20 in seinen vier Eckpunkten geführt und bewegt sich translatorsich dem Arbeitshub 23 entlang auf und ab.

Es ergibt sich, dass erfindungsgemäss mindestens zwei, aber auch drei oder vier oder mehr als vier , Blattfedern für die Aufhängung des Messerträgers 20 eingesetzt werden können; eine Anordnung der jeweiligen Blattfedern parallel oder senkrecht zum Messerträger 20 ergibt sich, wie auch deren Anzahl, aus dem Schnittparametern und der geforderten Schnittqualität.

Auch können z.B. die Blattfedern 40,43 nicht auf derselben Seite des Messerträgers 10, sondern auf verschiedenen Seiten angeordnet werden. Bis beeinflusst die Art der sich ergebenden Verspannung der Blattfedern 40,43 gegebenenfalls weiter 46,49.

Die erfindungsgemässe Verwendung von Blattfedern ist nicht auf eine Ausführungsform beschränkt, bei welchem der untere Messerträger 10 fest und nur der obere Messerträger 20 beweglich angeordnet ist. Solange die Relativbewegung der Messerträger 10,20 über erfindungsgemäss eingesetzte Blattfedern erfolgt, das heisst die Messerträger 10,20 miteinander über die Blattfedern in Verbindung stehen, wird die Aufgabe, die der vorliegenden Erfindung zu Grunde liegt, gelöst.

Bei noch einer weiteren Ausführungsform (welche in den Figuren nicht dargestellt ist) sind die Blattfederanordnungen nicht mit dem einen Ende an dem einen Messerträger und mit dem anderen Ende an dem anderen Messerträger angeordnet, sondern stehen mit beiden Enden mit dem einen Messerträger in Verbindung und über den Federkörper mit dem anderen Messerträger. Dann sind die Blattfederanordnungen endseitig gegenüber dem einen Messerträger so zu verankern, dass diese in Ruhestellung bogenförmig ausgebildet sind und der Federweg (das heisst der Arbeitshub 23) gegen die Verankerung, auf sie zu und von dieser weg, erfolgt. Durch solch eine Anordnung wird ein strikt linearer Arbeitshub 23 erzielt. Wird solch eine Anordnung an Stelle der in den Figuren 1 und 2 gezeigten Verbindung der Messerträger 10,20 über die Blattfedern 46,49 verwendet, entfällt natürlich die Verspannung der Blattfedern 40,43, was wiederum in je nach Schnittparametern und Material wünschenswert (oder nicht) sein kann. Natürlich liegt es im Bereich der Erfindung, bei solchen Blattfederanordnungen (mit beiden Enden am einen Messerträger verankert) nicht die in den Figuren 1 und 2 gezeigte Ausrichtung der Blattfedern 40,43 zu verwenden, sondern wie oben erwähnt, alle vier Blattfederanordnungen parallel zueinander anzuordnen.

Bei der Ausführungsform gemäss den Figuren 1 und 2 sind die Blattfederanordnungen als einzelne Blattfeder ausgebildet; es können jedoch auch Federpakete aus gestapelten Blattfedern oder eine andere Konfiguration zusammengesetzter Blattfedern verwendet werden, solange sich die Funktion der in den Figuren 1 und 2 dargestellten Blattfedern 40, 43,46 und 49 ergibt.

Soll, wie oben beschrieben, die Anzahl, Konfiguration und Anordnung der Blattfederanordnungen gegenüber dem in den Figuren 1 und 2 dargestellten, bevorzugten Ausführungsbeispiel auf Grund von speziellen Schnittparametern bzw. speziellem Material oder sonstigen, speziellen Anforderungen abweichend gewählt werden, kann der Fachmann die beste Lösung leicht an Hand von Versuchen ermitteln.

Während in der vorliegenden Anmeldung bevorzugte Ausführungsformen der Erfindung beschrieben sind, ist klar darauf hinzuweisen, dass die Erfindung nicht auf diese beschränkt ist und auch in anderer Weise innerhalb des Umfanges der folgenden Ansprüche ausgeführt werden kann.

## Patentansprüche

1. Schlagschere für Bleche mit zwei über einen Arbeitshub (23) relativ zueinander beweglichen Messerträgern (10,20), wobei die Messerträger (10,20) über mindestens zwei Blattfederanordnungen (40;43;46;49) miteinander in Verbindung stehen, **dadurch gekennzeichnet, dass** der elastische Deformationsbereich der Blattfederanordnungen (40, 43, 46, 49) den maximalen Bereich der Relativbewegung (23) bestimmt.

2. Schlagschere nach Anspruch 1, mit einem fest abgestützten, vorzugsweise unteren (10) und einem beweglich gelagerten, den Arbeitshub (23) ausführenden, vorzugsweise oberen Messerträger (20), **dadurch gekennzeichnet, dass** der bewegliche Messerträger (20) an den mindestens zwei Blattfederanordnungen (40; 43; 46; 49) schwimmend aufgehängt ist, wobei deren Deformationsbereich den Pfad der Relativbewegung (23) vollständig definiert.

3. Schlagschere nach einem der Ansprüche 1 oder 2, **dadurch gekennzeichnet, dass** mindestens eine Blattfederanordnung (40;43;46;49) seitlich an der Schere (1), am einen Ende der sich durch diese erstreckenden Messerträger (10,20) angeordnet ist und sich sowohl zu diesen als auch zur Richtung des Arbeitshubs (23) im wesentlichen senkrecht erstreckt.

4. Schlagscheren nach einem der Ansprüche 1 bis 3, **dadurch gekennzeichnet, dass** mindestens eine Blattfederanordnung (40;43;46;49) parallel zu den Messerträgern (10,20) und senkrecht zur Richtung des Arbeitshubs (23) verlaufend angeordnet ist.

5. Schlagschere nach einem der Ansprüche 1 bis 4, **dadurch** gekenntzeichnet, dass mindestens eine Blattfederanordnung (40;43;46;49), vorzugsweise alle Blattfederanordnungen, über deren eines Ende (41;44;48) mit dem einen Messerträger (20) und über deren anderes Ende (42; 45) mit dem anderen Messerträger (10) in Verbindung stehen, derart, dass durch gegenseitige, durch die Federung bedingte Verschiebung dieser Enden die Messerträger (10,20) aufeinander zu und voneinander weg bewegbar sind.

6. Schlagschere nach der Anspruch 5, **dadurch gekennzeichnet, dass** die Verbindung der Enden der mindestens einen Blattfederanordnung (40;43;46;49), vorzugsweise aller Blattfederanordnungen, zum jeweiligen Messerträger (10,20) starr ausgebildet ist, derart, dass die Deformation der Blattfederanordnung (40;43;46;49) S-förmig erfolgt.

7. Schlagschere nach einem der Ansprüche 1 bis 6, **dadurch gekennzeichnet, dass** mindestens der eine Messerträger (10,20) einen aus einem vorzugsweise kastenförmigen Hohlprofil aufgebauten Körper (11,21) besitzt, wobei die Verbindung mit der Blattfederanordnung (40;43; 46;49) über einen starr am Körper angeordnetes Verbindungselement (26,27) erfolgt.

8. Schlagschere nach den Ansprüchen 3, 6 und 7, **dadurch gekennzeichnet, dass** die Messerträger (10,20) am demselben Ende und im gegenseitig zugewendeten Bereich je ein als Verbindungsarm (60,61) ausgebildetes Verbindungselement für eine gemeinsame Blattfederanordnung (46,49) aufweisen, wobei die Verbindungsarme (60,61) für grosse Länge der Blattfederanordnung (46,49) voneinander wegweisen.

9. Schlagschere nach Anspruch 5 und 7, **gekennzeichnet durch** eine Rahmenstruktur (2) mit mindestens einem Seitenteil (3) , vorzugsweise zwei die Messerträger (10,20) endseitig, zwischen sich einschliessenden Seitenteilen (3,4) , wobei ein fest abgestützer Messerträger (10) an dem mindestens einen Seitenteil (3) festgelegt ist und mindestens eine Blattfederanordnung (40,43), parallel zum beweglichen Messerträger (20) verlaufend, mit diesem und mit dem als Verbindungselement dienenden mindestens einen Seitenteil (3) starr verbunden ist.

10. Schlagschere nach einem der vorangehenden Ansprüche 1 bis 9, **dadurch gekennzeichnet, dass** die Messerträger durch drei Blattfederanordnungen miteinander in Verbindung stehen, von denen zwei (46,49) zueinander parallel verlaufen und eine (40) rechtwinklig zu den beiden anderen, wobei alle Blattfederanordnungen (40,46,49) in zueinander parallelen Ebenen liegen.

11. Schlagschere nach Anspruch 10, **dadurch gekennzeichnet, dass** die zwei zu einander parallel angeordneten Blattfederanordnungen (46,49) je an an einem Ende der Messerträger (10,20) angeordnet sind und sich im wesentlichen senkrecht zu diesen und dem Arbeitshub (23) erstrecken.

12. Schlagschere nach einem der vorangehenden Ansprüche 1 bis 9, **dadurch gekennzeichnet, dass** die Messerträger (10,20) durch vier Blattfederanordnungen (40; 43;46;49) miteinander verbunden sind.

13. Schlagschere nach Anspruch 9 und 12, **dadurch gekennzeichnet, dass** zwei Blattfedern (46,49) parallel zueinander und je an einem Ende der Messerträger (10,20) angeordnet sind und sich senkrecht zu diesen und dem Arbeitshub (23) erstrecken, und dass die anderen zwei Blattfedern (40,43) parallel zum beweglichen Messerträger (20) angeordnet sind, und mit diesem und mit dem einen als Verbindungselement dienenden Seitenteil (3) starr verbunden sind.

14. Schlagschere nach Anspruch 4, **dadurch gekennzeichnet, dass** mindestens eine Blattfederanordnung, vorzugsweise alle Blattfederanordnungen, über ihre Enden mit dem einen Messerträger (10,20) und über ihren Körper mit dem anderen Messerträger (20,10) in Verbindung stehen, derart, dass durch gegenseitige, durch die Federung bedingte Verschiebung dieser Verbindungspunkte die Messerträger (10,20) aufeinander zu und voneinander weg bewegbar sind.

15. Schlagschere nach Anspruch 14, **dadurch gekennzeichnet, dass** vier Blattfederanordnungen, je paarweise, einmal parallel zu den Messerträgern und einmal senkrecht zu diesen und dem Arbeitshub, angeordnet sind.

16. Schlagschere nach einem der vorangehenden Ansprüche 1 bis 15, **dadurch gekennzeichnet, dass** die mindestens eine Blattfederanordnung, vorzugsweise alle Blattfederanordnungen, als einfache Blattfeder (40; 43; 46; 49) ausgebildet sind.

17. Schlagschere nach Anspruch 16, **dadurch gekennzeichnet, dass** die einfache Blattfeder (40;43;46; 49) eine Breite besitzt, die das zehnfache, vorzugsweise das fünfzehnfache, ihrer Dicke übersteigt und die besonders bevorzugt das sechzehnfache ihrer Dicke beträgt.

18. Schlagschere nach Anspruch 16, **dadurch gekennzeichnet, dass** die einfache Blattfeder (40; 43; 46; 49) eine Länge besitzt, die das einfache, vorzugsweise das doppelte ihrer Breite übersteigt und die besonders bevorzugt das zweieinhalbfache ihrer Breite beträgt.

## Claims

1. Guillotine shear for metal sheets with two blade supports (10, 20) which are movable relatively to each other by means of a working stroke (23), wherein the blade supports (10, 20) are connected to each other by means of at least two leaf spring arrangements (40; 43; 46; 49), **characterized in that** the elastic deformation area of the leaf spring arrangements (40; 43; 46; 49) defines the maximum area of the relative motion (23).

2. Guillotine shear according to claim 1, with a fixedly supported, preferably lower blade support (10) and a movably mounted, preferably upper blade support (20) which carries out the working stroke (23), **characterized in that** the movable blade support (20) is hanged floatingly at the at least two leaf spring arrangements (40; 43; 46; 49), wherein their deformation area entirely defines the path of the relative motion (23).

3. Guillotine shear according to one of the claims 1 or 2, **characterized in that** at least a leaf spring arrangement (40; 43; 46; 49) is arranged at the side of the shear (1) at an end of the blade supports (10, 20) extending through it and extends substantially perpendicularly with respect to both the blade supports and the direction of the working stroke (23).

4. Guillotine shear according to one of the claims 1 to 3, **characterized in that** at least a leaf spring arrangement (40; 43; 46; 49) is arranged parallel to the blade supports (10, 20) and is running perpendicularly to the direction of the working stroke (23).

5. Guillotine shear according to one of the claims 1 to 4, **characterized in that** at least a leaf spring arrangement (40; 43; 46; 49), preferably all leaf spring arrangements, are connected via their one end (41; 44; 48) to the one blade support (20) and via their other end (42; 45) to the other blade support (10) in such a way, that the blade supports (10, 20) are movable towards each other and away from each other by means of mutual displacement of these ends due to the springing.

6. Guillotine shear according to claim 5, **characterized in that** the connection of the ends of the at least one leaf spring arrangement (40; 43; 46; 49), preferably of all leaf spring arrangements, to the respective blade support (10, 20) is rigid, in such a way that the deformation of the leaf spring arrangement (40; 43; 46; 49) takes place s-shaped.

7. Guillotine shear according to one of the claims 1 to 6, **characterized in that** at least the one blade support (10, 20) has a body (11, 21) built out of a preferably box-shaped hollow section, wherein the connection with the leaf spring arrangement (40; 43; 46; 49) takes place by means of a connection element (26, 27) which is rigidly arranged at the body.

8. Guillotine shear according to claims 3, 6 and 7, **characterized in that** the blade supports (10, 20) have each a connection element, at the same end and in the area facing one another, for a joint leaf spring arrangement (46, 49) formed as a connection arm (60, 61), wherein the connection arms (60, 61) point away from each other for a large length of the leaf spring arrangement (46, 49).

9. Guillotine shear according to claim 5 and 7, **characterized by** a frame structure (2) with at least a side part (3), preferably two side parts (3, 4) enclosing the blade supports (10, 20) on the end side between themselves, wherein a fixedly supported blade support (10) is fixed to the at least one side part (3) and at least a leaf spring arrangement (40, 43) which runs parallel to the movable blade support (20) is fixedly connected to it and to the at least one side part (3) which serves as connection element.

10. Guillotine shear according to one of the preceding claims 1 to 9, **characterized in that** the blade supports are connected to each other by means of three leaf spring arrangements, of which two (46, 49) run parallel to each other and one (40) at right angles to both others, wherein all leaf spring arrangements (40, 46, 49) lie in planes which are parallel to each other.

11. Guillotine shear according to claim 10, **characterized in that** the two leaf spring arrangements (46, 49) which are arranged parallel to each other are arranged each at one end of the blade supports (10, 20) and extend substantially perpendicular to them and to the working stroke (23).

12. Guillotine shear according to one of the preceding claims 1 to 9, **characterized in that** the blade supports (10, 20) are connected to each other by means of four leaf spring arrangements (40; 43; 46; 49).

13. Guillotine shear according to claim 9 and 12, **characterized in that** two leaf springs (46, 49) are arranged parallel to each other and each one at an end of the blade supports (10, 20) and extend perpendicular to them and to the working stroke (23), and that the other two leaf springs (40, 43) are arranged parallel to the movable blade support (20), and are rigidly connected to it and to the side part (3) which serves as connection element.

14. Guillotine shear according to claim 4, **characterized in that** at least a leaf spring arrangement, preferably all leaf spring arrangements, are connected to the one blade support (10, 20) via their ends and to the other blade support (20, 10) via their bodies, such that the blade supports (10, 20) are movable towards each other and away from each other by means of displacement of these connection points due to the springing.

15. Guillotine shear according to claim 14, **characterized in that** four leaf spring arrangements are arranged in pairs, one pair parallel to the blade supports and the other pair perpendicular to them and to the working stroke.

16. Guillotine shear according to one of the preceding claims 1 to 15, **characterized in that** at least a leaf spring arrangement, preferably all leaf spring arrangements, are formed as simple leaf springs (40; 43; 46; 49).

17. Guillotine shear according to claim 16, **characterized in that** the simple leaf spring (40; 43; 46; 49) has a width exceeding ten times, preferably fifteen times its thickness and which amounts particularly preferred to sixteen times its thickness.

18. Guillotine shear according to claim 16, **characterized in that** the simple leaf spring (40; 43; 46; 49) has a length exceeding once, preferably twice its width and which amounts particularly preferred to two and a half times its width.

## Revendications

1. Cisaille-guillotine pour tôles, comprenant deux porte- lame (10, 20) mobiles l'un par rapport à l'autre sous l'effet d'une course de travail (23), dans laquelle les porte-lames (10, 20) sont raccordés mutuellement par le biais d'au moins deux agencements de ressorts à lame (40 ; 43 ; 46 ; 49), **caractérisée en ce que** la zone de déformation élastique des agencements de ressorts à lame (40, 43, 46, 49) détermine la zone maximale du mouvement relatif (23).

2. Cisaille-guillotine selon la revendication 1, comprenant un porte-lame (10) de préférence inférieur, monté fixe, et un porte-lame (20) de préférence supérieur, monté mobile et exécutant la course de travail (23), **caractérisée en ce que** le porte-lame mobile (20) est accroché de manière flottante aux au moins deux agencements de ressorts à lame (40 ; 43 ; 46 ; 49), leur zone de déformation définissant complètement le chemin du mouvement relatif (23).

3. Cisaille-guillotine selon l'une quelconque des revendications 1 ou 2, **caractérisée en ce qu'**au moins un agencement de ressorts à lame (40 ; 43 ; 46 ; 49) est aménagé latéralement à la cisaille (1) à une extrémité des porte-lames (10, 20) s'étendant à travers celle-ci et s'étend de manière sensiblement perpendiculaire à ceux-ci et à la direction de la course de travail (23).

4. Cisaille-guillotine selon l'une quelconque des revendications 1 à 3, **caractérisée en ce qu'**au moins un agencement de ressorts à lame (40 ; 43 ; 46 ; 49) est agencé de manière à s'étendre parallèlement aux porte-lames (10, 20) et perpendiculairement à la direction de la course de travail (23).

5. Cisaille-guillotine selon l'une quelconque des revendications 1 à 4, **caractérisée en ce qu'**au moins un agencement de ressorts à lame (40 ; 43 ; 46 ; 49), de préférence tous les agencements de ressorts à lame, est/sont raccordé(s) par l'une de ses/leurs extrémités (41 ; 44 ; 48) à l'un des porte-lames (20) et, par l'autre extrémité (42 ; 45), à l'autre porte-lame (10) de sorte que les porte-lames (10, 20) puissent être rapprochés ou éloignés l'un de l'autre en raison du déplacement mutuel de ces extrémités engendré par les ressorts.

6. Cisaille-guillotine selon la revendication 5, **caractérisée en ce que** le raccordement des extrémités du au moins un agencement de ressorts à lame (40 ; 43 ; 46 ; 49), de préférence de tous les agencements de ressorts à lame, au porte-lame respectif (10, 20) est assuré de manière rigide de sorte que la déformation de l'agencement de ressorts à lame (40 ; 43 ; 46 ; 49) se fasse en forme de S.

7. Cisaille-guillotine selon l'une quelconque des revendications 1 à 6, **caractérisée en ce qu'**au moins l'un des porte-lames (10, 20) possède un corps (11, 21) constitué d'un profilé creux de préférence en forme de caisse, dans laquelle le raccordement avec l'agencement de ressorts à lame (40 ; 43 ; 46 ; 49) se fait par le biais d'un élément de raccordement (26, 27) agencé de manière rigide sur le corps.

8. Cisaille-guillotine selon l'une quelconque des revendications 3, 6 et 7, **caractérisée en ce que** les porte-lames (10, 20) présentent, à la même extrémité et dans la zone dans laquelle ils se font face mutuellement, respectivement un élément de raccordement conformé en bras de raccordement (60, 61) pour un agencement commun de ressorts à lame (46, 49), dans laquelle les bras de raccordement (60, 61) s'écartent l'un de l'autre pour une grande longueur de l'agencement de ressorts à lame (46, 49).

9. Cisaille-guillotine selon les revendications 5 et 7, **caractérisée par** une structure de cadre (2), comprenant au moins une partie latérale (3), de préférence deux parties latérales (3, 4) entourant entre elles, aux extrémités, les porte-lames (10, 20), dans laquelle un porte-lame (10) monté fixe est fixé sur la au moins une partie latérale (3) et au moins un agencement de ressorts à lame (40, 43), s'étendant parallèlement au porte-lame mobile (20), est raccordé de manière rigide à celui-ci et à la au moins une partie latérale (3) servant d'élément de raccordement.

10. Cisaille-guillotine selon l'une quelconque des revendications précédentes 1 à 9, **caractérisée en ce que** les porte-lames sont raccordés l'un à l'autre par trois agencements de ressorts à lame, dont deux (46, 49) s'étendent parallèlement l'un à l'autre et dont l'autre (40) s'étend perpendiculairement aux deux autres agencements, tous les agencements de ressorts à lame (40, 46, 49) se situant dans des plans parallèles l'un à l'autre.

11. Cisaille-guillotine selon la revendication 10, **caractérisée en ce que** les deux agencements de ressorts à lame (46, 49) disposés parallèlement l'un à l'autre sont agencés respectivement à une extrémité des porte-lames (10, 20) et s'étendent sensiblement perpendiculairement à ceux-ci et à la course de travail (23).

12. Cisaille-guillotine selon l'une quelconque des revendications précédentes 1 à 9, **caractérisée en ce que** les porte-lames (10, 20) sont raccordés l'un à l'autre par quatre agencements de ressorts à lame (40 ; 43 ; 46 ; 49).

13. Cisaille-guillotine selon les revendications 9 et 12, **caractérisée en ce que** deux ressorts à lame (46, 49) sont disposés parallèlement l'un à l'autre et respectivement à une extrémité des porte-lame (10, 20) et s'étendent perpendiculairement à ceux-ci et à la course de travail (23) et **en ce que** les deux autres ressorts à lame (40, 43) sont disposés parallèlement au porte-lame mobile (20) et sont raccordés de manière rigide à celui-ci et à la partie latérale (3) servant d'élément de raccordement.

14. Cisaille-guillotine selon la revendication 4, **caractérisée en ce qu'**au moins un agencement de ressorts à lame, de préférence tous les agencements de ressorts à lame, est/sont raccordé(s) par ses/leurs extrémités à l'un des porte-lames (10, 20) et par son/leur corps à l'autre porte-lame (20, 10) de sorte que les porte-lames (10, 20) puissent être rapprochés ou éloignés l'un de l'autre du fait du déplacement mutuel de ces points de raccordement engendré par les ressorts.

15. Cisaille-guillotine selon la revendication 14, **caractérisée en ce que** quatre agencements de ressorts à lame sont agencés respectivement par paires une fois parallèlement aux porte-lames et une fois perpendiculairement à ceux-ci et à la course de travail.

16. Cisaille-guillotine selon l'une quelconque des revendications précédentes 1 à 15, **caractérisée en ce que** le au moins un agencement de ressorts à lame, de préférence tous les agencements de ressorts à lame, se présente(nt) sous la forme de ressorts à lame simple (40 ; 43 ; 46 ; 49).

17. Cisaille-guillotine selon la revendication 16, **caractérisée en ce que** le ressort à lame simple (40 ; 43 ; 46 ; 49) possède une largeur qui dépasse dix fois, de préférence quinze fois son épaisseur et qui, mieux encore, est de seize fois son épaisseur.

18. Cisaille-guillotine selon la revendication 16, **caractérisée en ce que** le ressort à lame simple (40 ; 43 ; 46 ; 49) possède une longueur qui dépasse sa largeur, de préférence dépasse deux fois sa largeur et qui, mieux encore, est de deux fois et demie sa largeur.
